# FASCICULE DE BREVET EUROPEEN

(11) **EP 2 319 762 B1**
(45) Date de publication et mention de la délivrance du brevet: **16.12.2015**
(21) Numéro de dépôt: 11154846.7
(22) Date de dépôt: 28.07.2008
(51) Int. Cl.: B64D 29/06, E05C 7/04, E05C 19/08

(54) **Dispositif de liaison, destiné à relier un premier et un second éléments mobiles l'un par rapport à l'autre**
Vorrichtung zum Verbinden von zwei beweglichen Elementen
Linking device intended for mutually connecting first and second mobile elements

(30) Priorité: 20.08.2007 FR 0705930
(43) Date de publication de la demande: 11.05.2011
(62) Demande divisionnaire de: 08786491.4
(73) Titulaire: Aircelle, 76700 Gonfreville L'Orcher (FR)
(72) Inventeur: Soulier, Pascal-Marie Paul Marcel, 76600, LE HAVRE (FR); de Sorbay, Aurélie, 64250, CAMBO-LES-BAINS (FR)
(74) Mandataire: Chevalier, Renaud Philippe

(56) Documents cités:
- EP-A- 0 155 887
- EP-A- 1 167 186
- EP-A- 1 245 769
- EP-A- 1 336 707
- US-A- 4 585 189

## Description

L'invention concerne un dispositif de liaison, destiné à relier un premier et un second éléments mobiles l'un par rapport à l'autre.

Un dispositif de liaison est notamment utilisé dans le domaine de l'aéronautique, en particulier afin d'équiper des nacelles.

Une nacelle est un élément de carénage permettant de protéger un réacteur d'un aéronef. Une nacelle comporte généralement une section avant d'entrée d'air, une section médiane destinée à entourer une soufflante du turboréacteur, et une section arrière formée à partir d'au moins une première et une seconde demi-coquilles montées mobiles en rotation sur un mat de manière à pouvoir se déployer chacune entre une position de travail et une position de maintenance.

Des dispositifs de verrouillage sont disposés au niveau de zones de jonction entre les deux éléments articulés, disposées en partie inférieure, c'est-à-dire à 6 heures, et en partie supérieure, c'est-à-dire à 12 heures, afin d'éviter une ouverture de la nacelle durant le vol.

En partie supérieure de la nacelle, le mat est disposé entre les deux demi-coquilles de sorte qu'il est parfois nécessaire de prévoir un dispositif de liaison permettant de relier les deux demi-coquilles malgré leur écartement. D'une manière générale, les éléments de liaison permettent le passage d'efforts de traction d'une demi-coquille à une autre, le passage des efforts de compression étant assuré par l'intermédiaire de bielles de compression dédiées appelés « bielles bumper ».

Ainsi, un dispositif de liaison classique comporte une bielle reliée à la première et à la seconde demi-coquilles, respectivement au niveau d'une première et d'une seconde extrémités, au moins une des extrémités de la bielle comportant une tête destinée à coopérer avec des moyens de verrouillage de la demi-coquille correspondante de manière à réaliser la fixation amovible de la bielle sur l'élément mobile correspondant.

Il est alors possible de séparer la bielle d'au moins l'une des deux demi-coquilles afin de permettre l'écartement de celles-ci lors d'opérations de maintenance.

Ce type de dispositif de liaison présente les inconvénients exposés ci-après.

Une fois que la bielle est détachée de la demi-coquille correspondante, celle-ci tombe sous l'effet de la gravité.

Il est généralement prévu un système de rampe de repositionnement afin de permettre le réengagement de celle-ci par rapport à la demi-coquille correspondante lors de la fermeture de la nacelle, de manière à ce que la tête de la bielle coopère avec les moyens de verrouillage. Le système de rampe de repositionnement est notamment installé au niveau du réacteur.

Un système de ce type ne permet pas d'assurer de manière fiable le repositionnement de la bielle. Il pose en outre des problèmes d'encombrement et de gestion d'interface entre la nacelle elle-même et le réacteur. Un autre inconvénient provient du fait de l'introduction d'efforts parasites issus de la vibration ou de la dilatation thermique dues au réacteur.

La demande de brevet EP 1 927 711 constitue un art antérieur au titre de l'article 54(3) CBE et décrit un dispositif de liaison intégrant un organe de guidage télescopique servant au support et au guidage de la bielle lors du déplacement des éléments mobiles.

La demande de brevet EP 1 336 707, qui est considéré comme l'art antérieur le plus proche et décrit les caractéristiques du préambule de la revendication 1, décrit un système de fermeture interposé entre deux éléments aptes à occuper, l'un par rapport à l'autre, une position ouverte et une position fermée, ledit système comprenant au moins un mécanisme de verrouillage principal et un mécanisme de verrouillage de secours.

L'invention vise à remédier en tout ou partie à ces inconvénients en proposant un dispositif de liaison peu encombrant, permettant un réengagement fiable de la bielle par rapport à la demi-coquille correspondante, sans contact ou interférence avec le réacteur.

A cet effet, l'invention concerne un dispositif de liaison, destiné à relier un premier et un second éléments mobiles l'un par rapport à l'autre, comportant une bielle reliée au premier et au second éléments mobiles respectivement au niveau d'une première et d'une seconde extrémités, au moins une des extrémités de la bielle comportant une tête destinée à coopérer avec des moyens de verrouillage de l'élément mobile correspondant de manière à réaliser la fixation amovible de la bielle sur l'élément mobile correspondant, le dispositif de liaison comportant au moins un organe de guidage télescopique servant au support et au guidage de la bielle lors du déplacement des éléments mobiles, comportant une première et une seconde extrémités destinées à être rattachées respectivement à un premier et un second éléments supports, caractérisé en ce que la première extrémité de l'organe de guidage télescopique est destinée à être rattachée au premier élément mobile, l'organe de guidage télescopique comportant un bras qui, destiné à être rattaché à un mat, est articulé sur la seconde extrémité de l'organe de guidage télescopique.

Ainsi, dans le cadre spécifique mais non exhaustif de l'application du dispositif de liaison selon l'invention à une nacelle, le dispositif de liaison permet de soutenir la bielle après désengagement de la tête par rapport aux moyens de verrouillage.

De cette manière, même après écartement des deux éléments mobiles, à savoir des deux demi-coquilles dans le cas spécifique précité d'une nacelle, la bielle retrouve sa position d'origine après rapprochement des deux éléments mobiles de sorte que la tête puisse à nouveau s'engager dans les moyens de verrouillage.

Cette forme de réalisation permet, en particulier dans le cas d'une nacelle fixée à un mat, de pouvoir ouvrir la nacelle selon un angle important sans être gêné par le mat. En effet, dans le cas où l'organe de liaison est fixé à chacune des deux demi-coquilles, il peut être nécessaire de limiter l'angle d'ouverture de manière à éviter que l'organe de liaison ne vienne en butée contre le mat.

Selon une caractéristique de l'invention, l'organe de guidage télescopique comporte une pluralité d'éléments tubulaires coulissant les uns par rapport aux autres entre une position déployée et une position rétractée de l'organe de guidage télescopique, la bielle étant logée dans les éléments tubulaires.

Cette caractéristique permet d'améliorer la compacité du dispositif de liaison.

Avantageusement, la tête de la bielle est arrondie et est destinée à s'engager dans les moyens de verrouillage.

La tête arrondie permet de compenser les éventuels défauts de position de la tête par rapport aux moyens de verrouillage correspondant lors de la fermeture de la nacelle. La tête arrondie permet alors de guider l'extrémité concernée de la bielle lors de son engagement dans les moyens de verrouillage précités.

L'invention concerne en outre une nacelle de turboréacteur comprenant une section avant d'entrée d'air, une section médiane destinée à entourer une soufflante du turboréacteur, et une section arrière formée à partir d'au moins une première et une seconde demi-coquilles montées mobiles en rotation sur un mat de manière à pouvoir se déployer chacune entre une position de travail dans laquelle les demi-coquilles sont rapprochées l'une de l'autre et une position de maintenance dans laquelle les demi-coquilles sont écartées l'une de l'autre, caractérisée en ce que la section arrière est équipée d'au moins un dispositif de liaison selon l'invention, la première extrémité de l'organe de guidage télescopique étant rattachée à la première demi-coquille, la seconde extrémité de l'organe de guidage télescopique étant destinée à être rattachée au mat.

Selon une caractéristique de l'invention, les moyens de verrouillage équipent la seconde demi-coquille et coopèrent avec la tête de la bielle en position de travail de la nacelle, la seconde extrémité de l'organe de guidage télescopique étant disposée en regard des moyens de verrouillage en position de maintenance de la nacelle.

En outre, l'invention concerne un aéronef, caractérisé en ce qu'il comporte au moins une nacelle selon l'invention.

De toute façon, l'invention sera bien comprise à l'aide de la description qui suit en référence au dessin schématique annexé représentant, à titres d'exemples, plusieurs formes de réalisation de ce dispositif de liaison.
Figure 1 est une vue schématique d'une nacelle en coupe longitudinale;
Figure 2 est une vue éclatée de la nacelle, en perspective et vue de l'avant ;
Figure 3 est une vue en coupe longitudinale d'une forme de réalisation du dispositif de liaison, en position déployée de la première demi-coquille ;
Figure 4 est une vue schématique d'une partie de la nacelle en position fermée, la nacelle étant équipée du dispositif de liaison précité ;
Figure 5 est une vue correspondant à la figure 4, seule une première demi-coquille étant ouverte ;
Figure 6 est une vue correspondant à la figure 4, seule une seconde demi-coquille étant ouverte ;
Figure 7 est vue correspondant à la figure 4, les deux demi-coquilles étant ouvertes ;

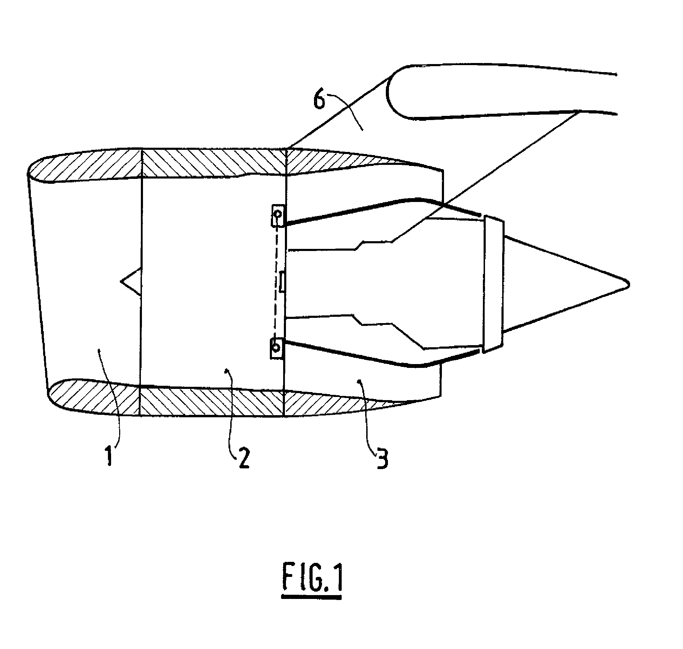

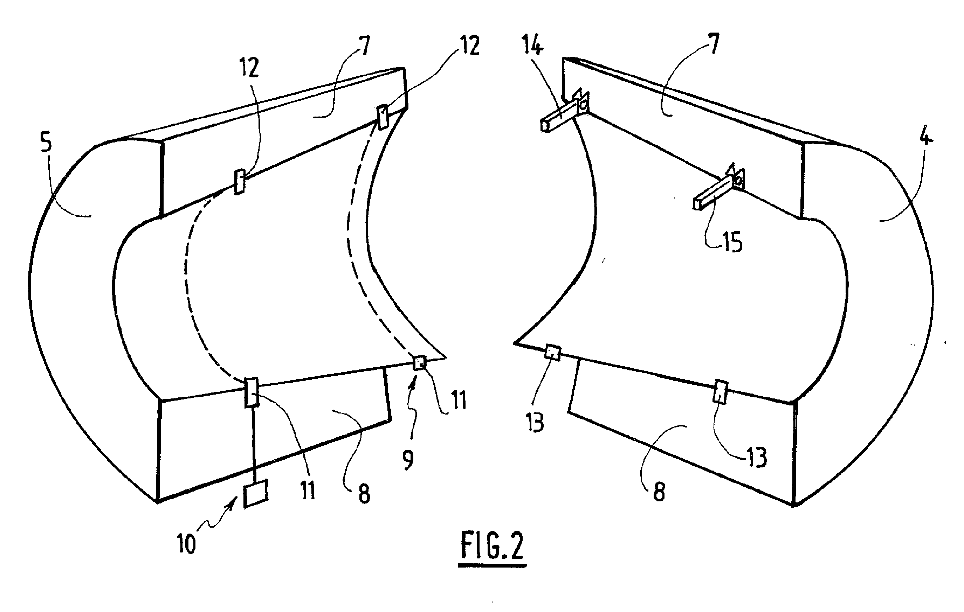

Les figures 1 et 2 représentent la structure générale d'une nacelle de turboréacteur selon l'invention. Celle-ci comprend une section avant 1 d'entrée d'air, une section médiane 2 destinée à entourer une soufflante du turboréacteur, et une section arrière 3 formée à partir d'au moins une première et une seconde demi-coquilles 4, 5 montées mobiles en rotation sur un mat 6 d'un aéronef de manière à pouvoir se déployer chacune entre une position de travail et une position de maintenance.

Chaque demi-coquille 4, 5 présente la forme générale d'un demi-cylindre creux, délimitant deux zones de jonction avec la demi-coquille lui faisant face, à savoir une zone de jonction supérieure 7 et une zone de jonction inférieure 8.

Les positions inférieures et supérieures sont également appelées respectivement positions 6 heures et 12 heures.

La nacelle est équipée d'un premier et d'un second dispositifs de verrouillage 9, 10. Il est à noter que, pour des raisons de présentation, seuls deux de ces dispositifs sont représentés.

Chaque dispositif de verrouillage 9, 10 comporte un premier système de verrouillage 11 ainsi qu'un second système de verrouillage 12.

Les premiers systèmes de verrouillage 11 sont montés sur la seconde demi-coquille 5 et sont aptes à se verrouiller sur des organes de retenue 13 correspondants, montés sur la première demi-coquille 4.

Les seconds systèmes de verrouillage 12 sont montés sur la seconde demi-coquille 5 et coopèrent respectivement avec un premier et un second dispositifs de liaison 14, 15 montés sur la première demi-coquille 4, au niveau de la zone de jonction supérieure 7.

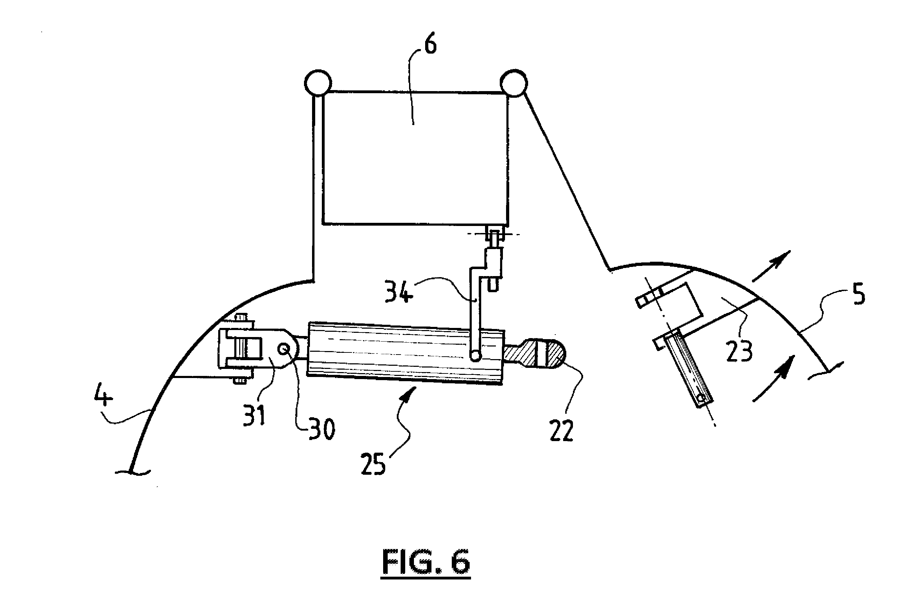

Les dispositifs de liaison 14, 15 permettent de relier les deux demi-coquilles 4, 5 malgré la présence du mat 6 entre celles-ci au niveau de leur zone de jonction supérieure 7, comme cela est représenté notamment à la figure 6.

On s'intéressera plus particulièrement à la structure et au fonctionnement du second dispositif de liaison 15.

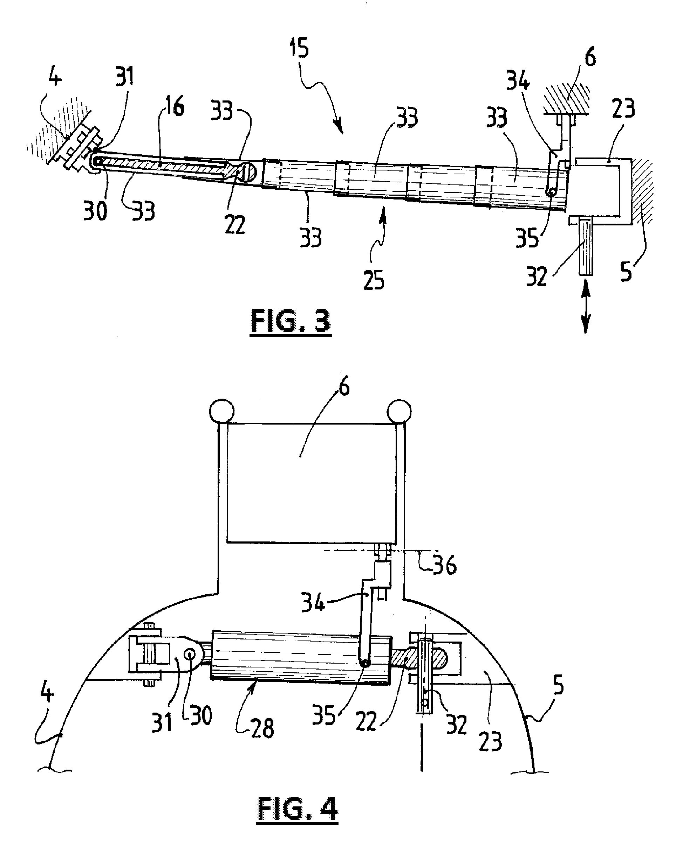

Les figures 3 à 7 représentent une forme de réalisation du dispositif de liaison selon l'invention, correspondant au second dispositif de liaison 15 dont la position sur la nacelle est illustrée en figure 2.

La structure du dispositif de liaison 15 selon cette seconde forme de réalisation est représentée plus particulièrement en figure 3.

La bielle 16 est montée de manière articulée sur la première demi-coquille 4 par l'intermédiaire d'un axe d'articulation 30 et d'une chape articulée 31. L'articulation de la bielle 16 ainsi obtenue permet des rotations suivant deux axes de pivotement perpendiculaires. La tête 22 de la bielle 16, disposée au niveau de sa seconde extrémité 19, est de forme arrondie et comporte un trou destiné à coopérer avec un pêne 32 des moyens de verrouillage 23 équipant la seconde demi-coquille 5.

L'organe de guidage télescopique 25 est formé par la succession de cinq éléments tubulaires 33 montés coulissant les uns dans les autres, la bielle 16 étant logée dans l'organe de guidage 25. Ce dernier est monté coulissant sur la bielle 16 au niveau d'une première extrémité et est équipé d'un bras de maintien 34 au niveau d'une seconde extrémité.

Selon une autre forme de réalisation non représentée, l'organe de guidage 25 est monté articulé sur l'axe 30 au niveau d'une première extrémité et est équipé d'un bras de maintien 34 au niveau d'une seconde extrémité.

Le bras de maintien 34 comporte une fourche montée pivotante au niveau de ses extrémités libres sur l'organe de guidage télescopique 25, autour d'un axe de pivotement 35. La base de la fourche est fixée au mat 6 par l'intermédiaire d'un axe d'articulation 36 perpendiculaire à l'axe de pivotement 35 de la fourche. La fourche comporte deux parties mobiles en translation l'une par rapport à l'autre de manière à autoriser un déplacement vertical de l'extrémité correspondante de l'organe de guidage télescopique 25.

L'articulation du bras 34 permet de faciliter le réengagement de la tête 22 de la bielle 16 dans les moyens de verrouillage 23, de s'affranchir des écarts de positionnement entre les deux demi-coquilles 4 et 5 et d'autoriser durant le vol des déplacements relatifs entre les deux demi-coquilles 4 et 5.

La figure 4 illustre schématiquement la nacelle en position fermée et équipée du dispositif de liaison précité.

En position fermée de la nacelle, la tête 22 de la bielle 16 est insérée dans les moyens de verrouillage 23 de sorte que le pêne 32 puisse être introduit dans le trou de la tête 22 de manière à réaliser le verrouillage de la nacelle.

Lors de l'ouverture de la nacelle, le pêne 32 est désengagé de la tête 22 et la première demi-coquille 4 est écartée de la seconde 5. L'organe de guidage télescopique 25 est alors déplié et la tête 22 vient se loger entièrement dans celui-ci. Lors du déploiement de l'organe de guidage télescopique 25, ce dernier pivote autour de l'axe 35 et coulisse le long de la bielle 16, elle-même articulée autour de l'axe 30.

Lors de la refermeture de la nacelle, la première demi-coquille 4 est à nouveau rapprochée de la seconde 5 de sorte que la tête 22 de la bielle 16 est amenée progressivement en regard des moyens de verrouillage 23.

L'engagement de la tête 22 dans les moyens de verrouillage 23 est ainsi assuré de manière fiable. La forme arrondie de la tête 22 participe en outre à la fiabilité de cette introduction, avec l'aide de moyens d'engagement équipant les moyens de verrouillage 23.

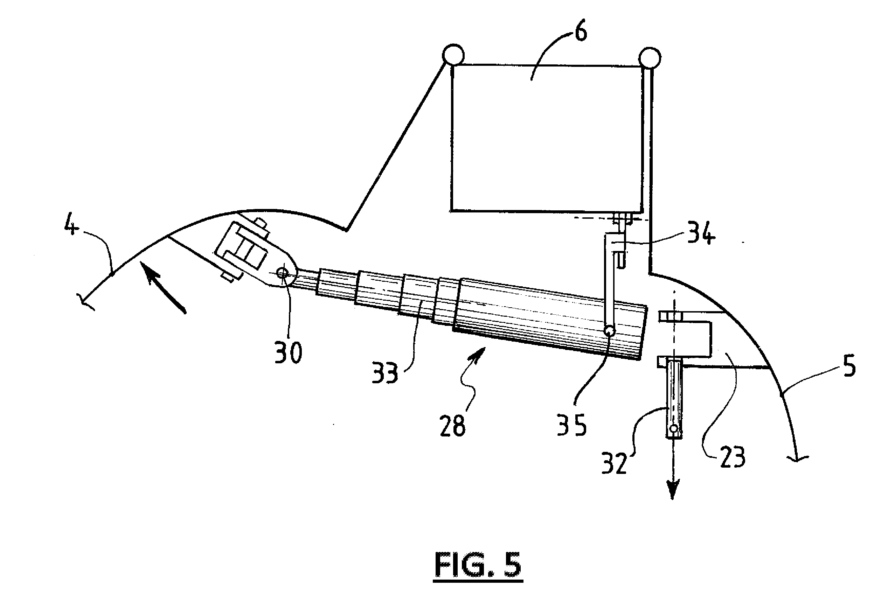

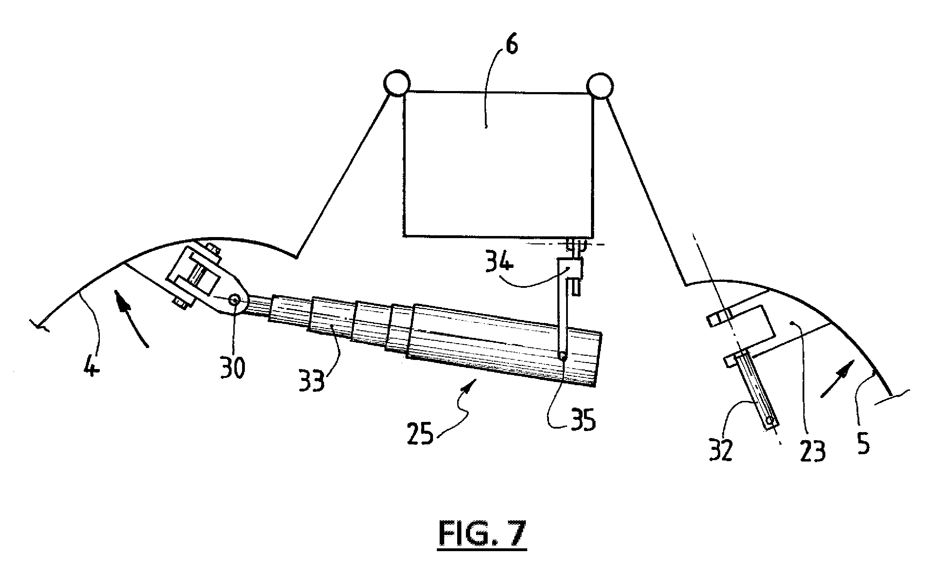

La figure 5 illustre l'ouverture de la nacelle par la seule ouverture de la première demi-coquille 4. Il est également possible d'ouvrir la nacelle par la seule ouverture de la seconde demi-coquille 5 ou par l'ouverture des deux demi-coquilles 4, 5, comme cela est représenté respectivement aux figures 6 et 7.

Comme il va de soi l'invention ne se limite pas aux seules formes de réalisation de ce dispositif de liaison, décrites ci-dessus à titre d'exemples, mais elle embrasse au contraire toutes les variantes.

## Revendications

1. Dispositif de liaison (15), destiné à relier un premier et un second éléments mobiles (4, 5) l'un par rapport à l'autre, comportant une bielle (16) reliée au premier et au second éléments mobiles (4, 5) respectivement au niveau d'une première et d'une seconde extrémités (18, 19), au moins une des extrémités de la bielle (16) comportant une tête (22) destinée à coopérer avec des moyens de verrouillage (23) de l'élément mobile correspondant (5) de manière à réaliser la fixation amovible de la bielle (16) sur l'élément mobile correspondant (5), le dispositif de liaison (15) comportant au moins un organe de guidage télescopique (25) servant au support et au guidage de la bielle (16) lors du déplacement des éléments mobiles (4, 5), comportant une première et une seconde extrémités destinées à être rattachées respectivement à un premier et un second éléments supports (23, 16), **caractérisé en ce que** la première extrémité de l'organe de guidage télescopique (25) est destinée à être rattachée au premier élément mobile (4), l'organe de guidage télescopique (25) comportant un bras (34) qui, destiné à être rattaché à un mat (6), est articulé sur la seconde extrémité de l'organe de guidage télescopique (25).

2. Dispositif de liaison (15) selon la revendication 1, **caractérisé en ce que** l'organe de guidage télescopique (25) comporte une pluralité d'éléments tubulaires (33) coulissant les uns par rapport aux autres entre une position déployée et une position rétractée de l'organe de guidage télescopique (25), la bielle (16) étant logée dans les éléments tubulaires (33).

3. Dispositif de liaison (15) selon l'une des revendications 1 ou 2, **caractérisé en ce que** la tête (22) de la bielle (16) est arrondie et est destinée à s'engager dans les moyens de verrouillage (23).

4. Nacelle de turboréacteur comprenant une section avant (1) d'entrée d'air, une section médiane (2) destinée à entourer une soufflante du turboréacteur, et une section arrière (3) formée à partir d'au moins une première et une seconde demi-coquilles (4, 5) montées mobiles en rotation sur un mat (6) de manière à pouvoir se déployer chacune entre une position de travail dans laquelle les demi-coquilles sont rapprochées l'une de l'autre et une position de maintenance dans laquelle les demi-coquilles sont écartées l'une de l'autre, **caractérisée en ce que** la section arrière (3) est équipée d'au moins un dispositif de liaison (15) selon l'une des revendications 1 à 3, la première extrémité de l'organe de guidage télescopique (25) étant rattachée à la première demi-coquille (4), la seconde extrémité de l'organe de guidage télescopique étant destinée à être rattachée au mat (6).

5. Nacelle selon la revendication 4, **caractérisée en ce que** les moyens de verrouillage (23) équipent la seconde demi-coquille (5) et coopèrent avec la tête (22) de la bielle (16) en position de travail de la nacelle, la seconde extrémité de l'organe de guidage télescopique (25) étant disposée en regard des moyens de verrouillage (23) en position de maintenance de la nacelle.

6. Aéronef, **caractérisé en ce qu'**il comporte au moins une nacelle selon la revendication 5.

## Patentansprüche

1. Verbindungsvorrichtung (15), die dazu bestimmt ist, ein erstes und ein zweites bewegliches Element (4, 5) miteinander zu verbinden, eine Kurbelstange (16) umfassend, die jeweils im Bereich eines ersten und eines zweiten Endes (18, 19) mit dem ersten und ein zweiten beweglichen Element (4, 5) verbunden ist, wobei zumindest eines der Enden der Kurbelstange (16) einen Kopf (22) umfasst, der dazu bestimmt ist, mit Verriegelungsmitteln (23) des entsprechenden beweglichen Elements (5) zusammenzuwirken, um die abnehmbare Befestigung der Kurbelstange (16) auf dem entsprechenden beweglichen Element (5) zu erzeugen, wobei die Verbindungsvorrichtung (15) zumindest ein teleskopisches Leitelement (25) umfasst, das zum Halten und zum Führen der Kurbelstange (16) beim Verfahren der beweglichen Elemente (4, 5) dient, ein erstes und ein zweites Ende umfassend, die dazu bestimmt sind, jeweils mit einem ersten und einem zweiten Trägerelement (23, 16) verbunden zu werden, **dadurch gekennzeichnet, dass** das erste Ende des teleskopischen Leitelements (25) dazu bestimmt ist, mit dem ersten beweglichen Element (4) verbunden zu werden, wobei das teleskopische Leitelement (25) einen Arm (34) umfasst, der dazu bestimmt ist, mit einem Masten (6) verbunden zu werden, und am zweiten Ende des teleskopischen Leitelements (25) gelenkig angebunden ist.

2. Verbindungsvorrichtung (15) nach Anspruch 1, **dadurch gekennzeichnet, dass** das teleskopische Leitelement (25) eine Vielzahl von rohrförmigen Elementen (33) umfasst, die jeweils zueinander zwischen einer ausgefahrenen Position und einer eingezogenen Position des teleskopischen Leitelements (25) gleiten, wobei die Kurbelstange (16) in den rohrförmigen Elementen (33) untergebracht ist.

3. Verbindungsvorrichtung (15) nach einem der Ansprüche 1 oder 2, **dadurch gekennzeichnet, dass** der Kopf (22) der Kurbelstange (16) abgerundet ist und dazu bestimmt ist, in die Verriegelungsmittel (23) eingebracht zu werden.

4. Turbotriebwerksgondel, einen vorderen Abschnitt (1) für den Lufteinlass umfassend, einen mittleren Abschnitt (2), der dazu bestimmt ist, ein Gebläse des Turbotriebwerks zu umgeben, und einen hinteren Abschnitt (3), der sich zumindest aus einer ersten und einer zweiten Halbschale (4, 5) zusammensetzt, die drehbar auf einem Masten (6) montiert sind, um sich jeweils zwischen einer Arbeitsposition, in der die Halbschalen einander angenähert sind, und einer Wartungsposition spreizen zu können, in der die Halbschalen voneinander entfernt sind, **dadurch gekennzeichnet, dass** der hintere Abschnitt (3) mit zumindest einer Verbindungsvorrichtung (15) nach einem der Ansprüche 1 bis 3 ausgestattet ist, wobei das erste Ende des teleskopischen Leitelements (25) mit der ersten Halbschale (4) verbunden ist, und das zweite Ende des teleskopischen Leitelements dazu bestimmt ist, mit dem Masten (6) verbunden zu werden.

5. Gondel nach Anspruch 4, **dadurch gekennzeichnet, dass** die Verriegelungsmittel (23) die zweite Halbschale (5) ausstatten und in der Arbeitsposition der Gondel mit dem Kopf (22) der Kurbelstange (16) zusammenwirken, wobei das zweite Ende des teleskopischen Leitelements (25) in der Wartungsposition der Gondel gegenüber den Verriegelungsmitteln (23) angeordnet ist.

6. Luftfahrzeug, **dadurch gekennzeichnet, dass** es zumindest eine Gondel nach Anspruch 5 umfasst.

## Claims

1. A connecting device (15), intended to connect a first and a second movable elements (4, 5) in relation to one another, including a connecting rod (16) connected to the first and second movable elements (4, 5) respectively at a first and a second ends (18, 19), at least one of the ends of the connecting rod (16) including a head (22) intended to cooperate with locking means (23) of the corresponding movable element (5) so as to carry out the removable fastening of the connecting rod (16) on the corresponding movable element (5), the connecting device (15) including at least one telescopic guide member (25) serving to support and to guide the connecting rod (16) during the displacement of the movable elements (4, 5), including a first and a second ends intended to be attached respectively to a first and a second support elements (23, 16), **characterized in that** the first end of the telescopic guide member (25) is intended to be attached to first movable element (4), the telescopic guide member (25) including one arm (34) which, intended to be attached to a mast (6), is articulated on the second end of the telescopic guide member (25).

2. The connecting device (15) according to claim 1, **characterized in that** the telescopic guide member (25) includes a plurality of tubular elements (33) sliding with respect to each other between a deployed position and a retracted position of the telescopic guide member (25), the connecting rod (16) being housed in the tubular elements (33).

3. The connecting device (15) according to any of claims 1 or 2, **characterized in that** the head (22) of the connecting rod (16) is rounded and is intended to engage in the locking means (23).

4. A turbojet engine nacelle comprising an air inlet front section (1), a mid-section (2) intended to surround a fan of the turbojet engine, and a rear section (3) formed from at least a first and a second half-shells (4, 5) movably mounted in rotation on a mast (6) so that they can each deploy between a working position in which the half-shells are moved close to one another and a maintenance position in which the half-shells are moved away from one another, **characterized in that** the rear section (3) is equipped with at least one connecting device (15) according to any of claims 1 or 3, the first end of the telescopic guide member (25) being attached to the first half-shell (4), the second end of the telescopic guide member being intended to be attached to the mat (6).

5. The nacelle according to claim 4, **characterized in that** the locking means (23) fit the second half-shell (5) and cooperate with the head (22) of the connecting rod (16) in the working position of the nacelle, the second end of the telescopic guide member (25) being disposed facing the locking means (23) in the maintenance position of the nacelle.

6. An aircraft, **characterized in that** it includes at least one nacelle according to claim 5.
